# FASCICULE DE BREVET EUROPEEN

(11) **EP 3 221 226 B1**
(45) Date de publication et mention de la délivrance du brevet: **05.12.2018**
(21) Numéro de dépôt: 15805602.8
(22) Date de dépôt: 19.11.2015
(51) Int. Cl.: B65D 5/74, B29C 45/00

(54) **DISPOSITIF DE BEC VERSEUR**
AUSGIESSTÜLLENVORRICHTUNG
POURING SPOUT DEVICE

(30) Priorité: 19.11.2014 FR 1461202
(43) Date de publication de la demande: 27.09.2017
(73) Titulaire: Viel, Daniel, 01100 Arbent (FR)
(72) Inventeur: Viel, Daniel, 01100 Arbent (FR)
(74) Mandataire: Delorme, Nicolas
(86) Numéro de dépôt international: PCT/FR2015/053139
(87) Numéro de publication internationale: WO 2016/079441

(56) Documents cités:
- EP-A1- 1 150 896
- GB-A- 879 851
- US-A- 5 201 462
- US-A- 5 413 238
- US-A- 5 718 371

## Description

La présente invention concerne un dispositif de bec verseur permettant d'ouvrir et fermer un emballage, ainsi qu'un procédé de fabrication d'un tel bec verseur.

Il est fréquent d'utiliser un emballage en matière plastique souple pour stocker, par exemple, des produits craignant l'humidité.

En outre ces emballages peuvent présenter d'excellentes caractéristiques de résistance mécanique, tout en étant peu onéreux.

Ainsi, ces emballages sont souvent utilisés pour stocker d'importants volumes de granules, comme par exemples, des aliments pour animaux, du sucre, ou des produits phytosanitaires.

Les dispositifs actuels de fermeture de ces emballages ne sont pas satisfaisants car ils sont onéreux.

Il est connu par le document US 5718371 d'utiliser un dispositif de bec verseur pour emballage, qui comprend un cadre rigide, une paire de panneaux latéraux et une porte articulée.

La porte articulée de ce dispositif est reliée au cadre par les panneaux latéraux et par un bord inférieur.

Le dispositif décrit par le document US 5718371 est moulé en une seule partie, avec une seule matière.

A l'usage, ce dispositif s'avère peu pratique car son ouverture est difficile.

En pratique, ce dispositif n'a pas connu d'application commerciale.

Le document US 5201462 décrit dans la figure 7 un carton selon le préambule de la revendication 1, ayant une ligne de pliage qui se termine par une fente ménagée dans un rebord d'une joue triangulaire.

Dans ce contexte technique, un but de la présente invention est de fournir un dispositif de bec verseur qui présente une structure rigide qui puisse être aisément manoeuvré par un utilisateur.

Selon une définition générale, l'invention propose un dispositif de bec verseur selon la revendication 1.

Ainsi, la combinaison d'un cadre et d'un capot moulés dans une première matière avec des joues et une charnière moulées dans une seconde matière, permet au dispositif selon l'invention de combiner les avantages des deux matières.

Le dispositif selon l'invention permet d'utiliser une première matière rigide et résistante pour le cadre et le capot.

De même, le dispositif selon l'invention permet d'utiliser une seconde matière souple pour les joues et la charnière.

Ainsi, la combinaison d'éléments moulés dans différentes matières, permet au dispositif selon l'invention de cumuler une structure rigide et résistante avec une articulation souple et aisément manoeuvrable.

L'invention propose donc un dispositif de bec verseur qui présente une structure rigide et qui peut être aisément manoeuvré par un utilisateur.

Selon un mode de réalisation, le dispositif peut présenter deux gaines d'étanchéité chacune venue de moulage avec une joue et enveloppant chacune une arête latérale du capot.

Cette disposition technique permet de maximiser l'étanchéité du dispositif de bec verseur, lorsqu'il est en position fermée.

Selon un mode de réalisation, la première matière peut comprendre un matériau rigide sélectionné dans un groupe constitué du polyéthylène et du polypropylène.

Ainsi, le cadre et le capot peuvent être résistants et présenter une rigidité adaptée à l'usage du dispositif sur un emballage souple.

Selon l'invention, la seconde matière comprend un matériau souple sélectionné dans un groupe constitué du polyuréthane et d'élastomères.

Ainsi les joues et la charnière sont souples pour permettre une ouverture et une fermeture aisée du dispositif de bec verseur.

De plus, l'usage d'un matériau de type polyuréthane permet aux joues de présenter une élasticité facilitant l'ouverture du dispositif selon l'invention.

Les deux joues présentent chacune une forme triangulaire convergente vers l'intérieur du cadre, la forme triangulaire présentant trois rebords et trois sommets.

Cette forme permet d'augmenter la souplesse de l'articulation entre le capot et le cadre.

Les deux joues possèdent chacune une ligne de pliage suivant sensiblement une ligne médiane entre l'un des sommets et l'un des rebords.

Chaque ligne de pliage permet à chaque joue d'être aisément pliée et déployée lors de l'ouverture et la fermeture du capot.

La ligne de pliage est terminée par une fente triangulaire ménagée dans un rebord.

La fente triangulaire ménagée dans un rebord permet de maintenir un écart entre les deux joues, lorsque le dispositif est en position fermée, de sorte que le dispositif en position fermée présente une épaisseur réduite.

En d'autres termes, la fente triangulaire ménagée dans un rebord permet d'éviter que les deux joues soient en contact, superposées l'une sur l'autre, lorsque le dispositif est en position fermée.

Selon un mode de réalisation, la ligne de pliage peut être terminée par une fente triangulaire ménagée à l'un des sommets.

La fente triangulaire ménagée à l'un des sommets peut permettre de faciliter la fermeture du dispositif. De plus, la fente triangulaire ménagée à l'un des sommets peut permettre au dispositif de présenter une épaisseur réduite, en position fermée.

Le cadre peut comprendre au moins une encoche adaptée pour être encliquetée avec une dent.

De plus, le capot peut comprendre au moins une dent adaptée pour être encliquetée dans l'encoche du cadre, pour fixer le capot au cadre.

L'encliquetage de la dent du capot dans l'encoche du cadre permet de verrouiller, de manière amovible, le capot au cadre.

Le capot peut comprendre un élément préhensible.

La présente invention porte également sur un procédé de fabrication selon la revendication 8. Le procédé comprend au moins une étape de moulage bi-matière du dispositif selon l'une des revendications 1 à 7.

Le moulage bi-matière permet de fabriquer le dispositif en un seul moulage. Ce procédé permet une fabrication rapide et peu onéreuse du dispositif selon l'invention.

En outre, le procédé selon l'invention peut comprendre au moins une étape de fourniture d'un moule configuré pour que le dispositif soit moulé dans une position ouverte dans laquelle ladite au moins une dent n'est pas encliquetée dans ladite au moins une encoche.

D'autres caractéristiques et avantages de l'invention se dégageront de la description qui va suivre, en regard des dessins annexés qui représentent trois formes de réalisation de l'invention.
- La figure 1 est une vue en perspective du dispositif selon l'invention, en position ouverte, selon un premier mode de réalisation ;
- La figure 2 est une vue en perspective du cadre et du capot ;
- La figure 3 est une vue en perspective des joues et de la charnière, selon un premier mode de réalisation ;
- La figure 4 est une vue en perspective du dispositif selon un premier mode de réalisation, en position fermée, fixé sur un emballage souple ;
- La figure 5 est une vue de trois-quarts avant du dispositif selon l'invention, en position ouverte, selon un deuxième mode de réalisation ;
- La figure 6 est une vue, de trois-quarts arrière du dispositif selon l'invention, en position ouverte, selon un deuxième mode de réalisation.
- La figure 7 est une vue de trois-quarts avant du dispositif selon l'invention, en position ouverte, selon un troisième mode de réalisation ;
- La figure 8 est une vue, de trois-quarts arrière du dispositif selon l'invention, en position ouverte, selon un troisième mode de réalisation.

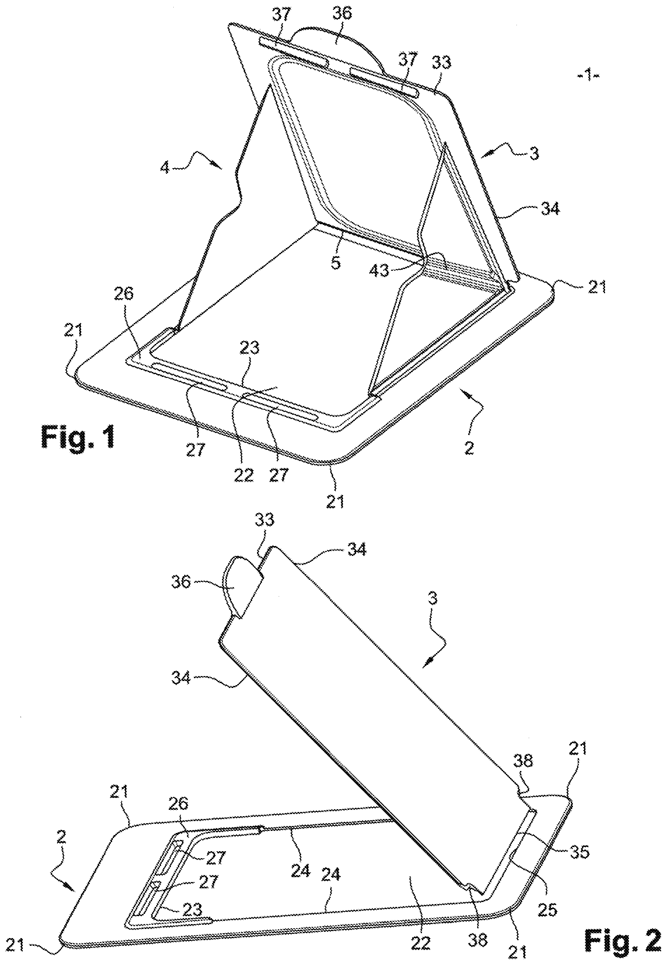

La figure 1 représente un premier mode de réalisation d'un dispositif 1 de bec verseur pour un emballage. Le dispositif 1 comprend un cadre 2, un capot 3, des joues 4 et une charnière 5.

Dans l'exemple représenté sur la figure 2, le cadre 2 présente une géométrie sensiblement rectangulaire.

En outre, le cadre 2 présente ici un congé 21 à chacun de ses angles.

De plus, le cadre 2 présente une ouverture 22.

L'ouverture 22 est délimitée par quatre bords définissant un rectangle : un bord supérieur 23, deux bords latéraux 24 et un bord inférieur 25.

Selon le mode de réalisation ici présenté, une lèvre 26 s'étend le long du bord supérieur 23 ainsi que le long d'une portion de chaque bord latéral 24.

Deux encoches 27 oblongues sont ménagées dans la lèvre 26, à proximité du bord supérieur 23.

Le capot 3 est visible sur la figure 2.

Le capot 3 présente quatre arêtes définissant un rectangle : une arête supérieure 33, deux arêtes latérales 34 et une arête inférieure 35.

L'arête supérieure 33 comprend un élément préhensible 36.

A proximité de l'arête inférieure 35, chaque arête latérale 34 présente une entaille 38.

Comme on peut le voir sur la figure 1, le capot 3 comprend deux dents 37 positionnées le long de l'arête supérieure 33.

En outre, l'arête supérieure 33 du capot 3 comprend un élément préhensible 36.

Le capot 3 est conçu pour obturer l'ouverture 22.

Selon un mode de réalisation, le cadre 2 et le capot 3 sont réalisés dans une première matière plastique telle que du polyéthylène moulé ou du polypropylène moulé.

D'une manière particulièrement avantageuse, le polyéthylène permet au cadre 2 et au capot 3 d'être rigides.

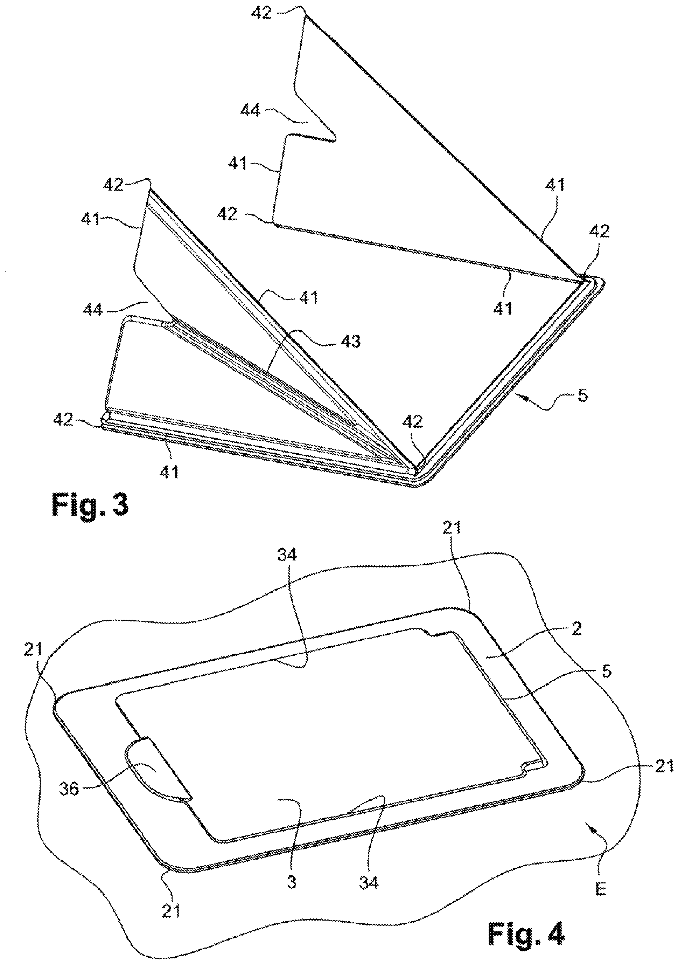

La figure 3 représente les joues 4 et la charnière 5.

Comme on peut le voir, chaque joue 4 présente une forme triangulaire qui comprend trois rebords 41 et trois sommets 42.

Une ligne de pliage 43 s'étend sur chaque joue 4 en suivant sensiblement une ligne médiane à partir de l'un des sommets 42.

La ligne de pliage 43 est terminée par une fente triangulaire 44 ménagée dans un rebord 41.

Les sommets 42 à partir desquels s'étendent les lignes de pliage 43, sont reliés par la charnière 5.

Dans l'exemple ici présenté, la charnière 5 est constituée d'une bande de matière plastique.

En outre, la bande constituant la charnière 5 peut être prolongée le long d'un rebord 41 de chaque joue 4.

Selon l'invention, les joues 4 et la charnière 5 sont réalisées dans une seconde matière plastique telle que du polyuréthane moulé.

D'une manière particulièrement avantageuse, le polyuréthane permet aux joues 4 et à la charnière 5 d'être souples.

Comme on peut l'apprécier sur la figure 1, chaque joue 4 est destinée à être maintenu entre un bord latéral 24 de l'ouverture 22 et une arête latérale 34 du capot 3.

De même, la charnière 5 est destinée à être positionnée entre le rebord inférieur 25 de l'ouverture 22 et l'arête inférieure 35 du capot 3.

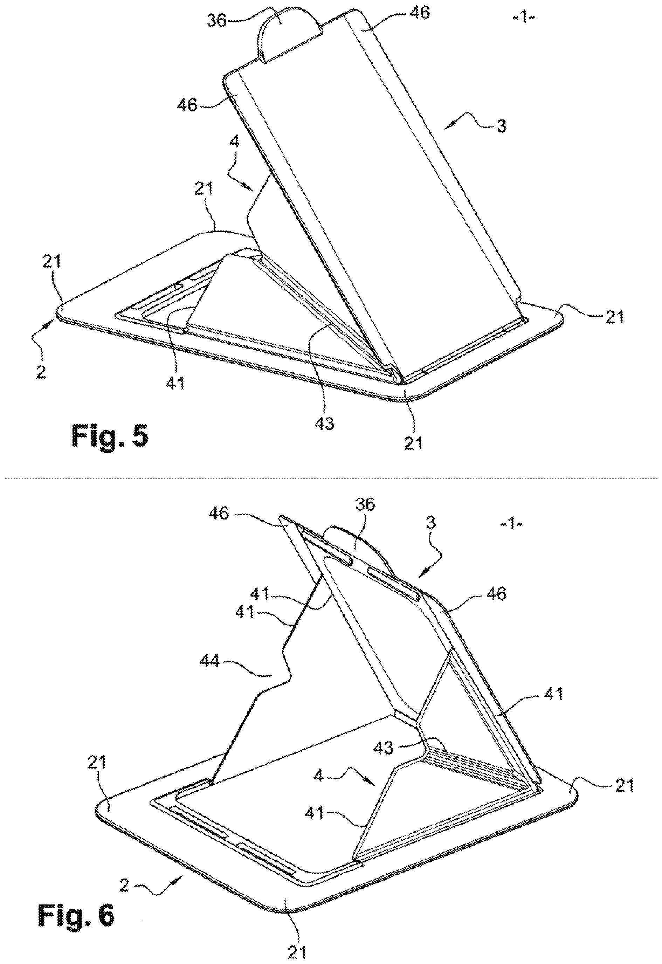

Les figures 5 et 6 présentent un deuxième mode de réalisation du dispositif 1.

Le deuxième mode de réalisation reprend l'ensemble des caractéristiques techniques du premier mode de réalisation, excepté les différences présentées ci-dessous.

Selon le deuxième mode de réalisation représenté sur les figures 5 et 6, deux rebords 41 peuvent être prolongés chacun par une gaine d'étanchéité 46.

Chaque gaine d'étanchéité 46 présente une section sensiblement en U conçue pour envelopper une arête latérale 34 du capot 3.

Comme on peut l'apprécier sur les figures 5 et 6, les deux gaines d'étanchéité 46 sont conçues pour être surmoulées chacune autour d'une région s'étendant à partir d'une arête latérale 34 du capot 3 respective.

Ce deuxième mode de réalisation permet de maximiser l'étanchéité du dispositif 1 lorsqu'il est en position fermée.

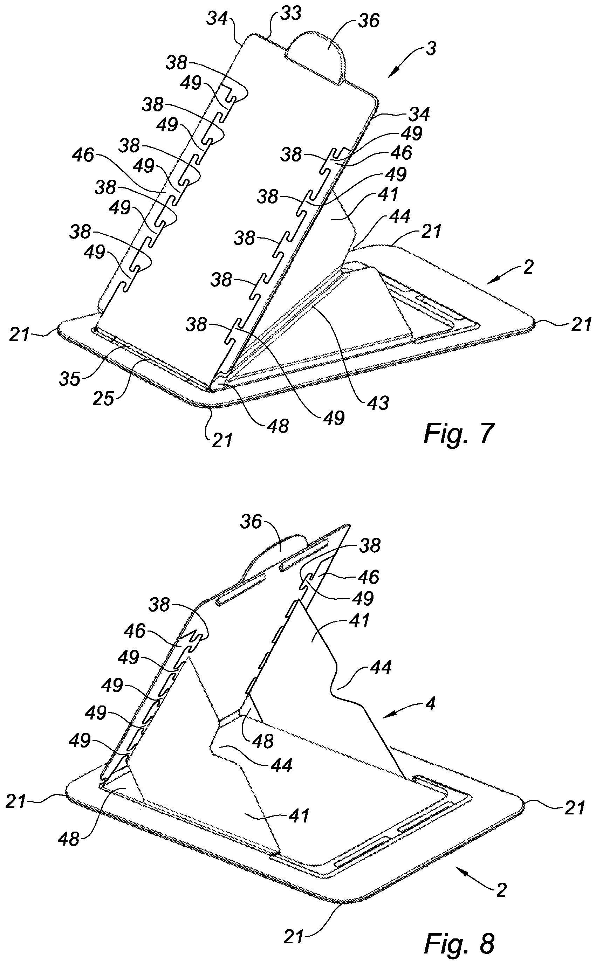

On peut se reporter aux figures 7 et 8, pour apprécier un troisième mode de réalisation du dispositif 1.

Le troisième mode de réalisation reprend l'ensemble des caractéristiques techniques du premier mode de réalisation, excepté les différences présentées ci-dessous.

Selon le troisième mode de réalisation, la ligne de pliage 43 est terminée par une fente triangulaire 48 ménagée dans un sommet 42.

La fente triangulaire 48 permet de faciliter la fermeture du dispositif 1.

Selon le troisième mode de réalisation, chaque arête latérale 34 présente une série d'encoches 38 en forme de T. Chaque encoche 38 en forme de T est adaptée pour recevoir une dent en forme de T.

De plus, selon le troisième mode de réalisation, deux rebords 41 peuvent être prolongés chacun par une gaine d'étanchéité 46.

Selon le troisième mode de réalisation, chaque gaine d'étanchéité 46 présente une série de dents 49 en forme de T.

Chaque dent 49 en forme de T est configurée pour être engagée dans une encoche 38 en forme de T, correspondante, pour lier chaque gaine d'étanchéité 46 à l'arête latérale 34 correspondante.

Le dispositif 1 peut être réalisé par un moulage bi-matière.

Ainsi, il est possible de fabriquer le dispositif 1 en un seul moulage.

En outre, selon un mode de réalisation, le dispositif 1 est moulé dans une position, dite ouverte, dans laquelle l'ouverture 22 n'est pas obturée par le capot 3.

Tel que représenté sur la figure 4, le dispositif 1 peut être, par exemple, soudé ou collé à un emballage E souple de type sachet, ou un autre emballage de type carton.

Les congés 21 permettent de préserver l'intégrité de l'emballage E auquel est fixé le cadre 2.

Un film plastique peut être déposé sur le dispositif 1 pour former une barrière étanche et empêcher l'oxydation du produit contenu dans l'emballage E.

A l'usage, un utilisateur peut saisir l'élément préhensible 36 pour manoeuvrer le capot 3 et ainsi ouvrir ou fermer le dispositif 1.

Lorsque le capot 3 est en position fermée, comme représenté sur la figure 4, chaque joue 4 est repliée le long de sa ligne de pliage 43.

En position fermée, les joues 4 sont rabattues vers l'intérieur du cadre 2, au dessus de l'ouverture 22.

En outre, en position fermée, les dents 37 sont chacune encliquetées dans une encoche 27 respective. Ainsi le capot 3 est verrouillé de manière amovible au cadre 2.

D'une manière avantageuse, en position fermée, les entailles 38 peuvent permettre la formation d'un pli de matière pour faciliter l'articulation du capot 3 par rapport au cadre 2.

Un utilisateur peut utiliser l'élément préhensible 36 pour placer le capot 3 en position ouverte.

Il est remarquable que la forme de chaque joue 4 et la souplesse du matériau utilisé, permettent aux joues 4 de présenter un effet ressort.

Ainsi, lors du déverrouillage du capot 3, les joues 4 se déplient et amènent le capot 3 en position ouverte.

Il s'agit là d'une disposition technique particulièrement avantageuse.

En effet, un utilisateur peut ainsi ouvrir le dispositif en utilisant une seule de ses deux mains. L'autre main pouvant être utilisée, par exemple, pour porter l'emballage.

Ainsi, la combinaison d'un cadre et un capot rigides avec des joues et une charnière souples, permet au dispositif selon l'invention de combiner l'avantage d'une structure rigide et résistante avec l'avantage d'une articulation souple aisément manoeuvrable.

Bien entendu, l'invention ne se limite pas aux seules formes d'exécution représentées ci-dessus, mais elle embrasse au contraire toutes les formes de réalisation, comme définies par les revendications.

## Revendications

1. Dispositif (1) de bec verseur pour un emballage (E) qui comprend un cadre (2) pourvu d'une ouverture (22) centrale destiné à être fixé sur l'emballage (E), et un capot (3) relié au cadre par deux joues (4) et une charnière (5), le cadre (2) et le capot (3) étant moulés dans une première matière, **caractérisé en ce que** les joues (4) et la charnière (5) sont moulées dans une seconde matière, ladite seconde matière comprenant un matériau souple sélectionné dans un groupe constitué du polyuréthane et d'élastomères, et **en ce que** les deux joues (4) présentent chacune une forme triangulaire convergente vers l'intérieur du cadre (2), la forme triangulaire présentant trois rebords (41) et trois sommets (42), et possèdent chacune une ligne de pliage (43) suivant sensiblement une ligne médiane entre l'un des sommets (42) et l'un des rebords (41), la ligne de pliage (43) étant terminée par une fente triangulaire (44) ménagée dans un rebord (41).

2. Dispositif selon la revendication 1, **caractérisé en ce que** le dispositif (1) présente deux gaines d'étanchéité (46) chacune venue de moulage avec une joue (4) et enveloppant chacune une arête latérale (34) du capot (3).

3. Dispositif (1) selon la revendication 1 ou 2, **caractérisé en ce que** la première matière comprend un matériau rigide sélectionné dans un groupe constitué du polyéthylène et du polypropylène.

4. Dispositif (1) selon l'une des revendications 1 à 3, **caractérisé en ce que** la ligne de pliage (43) est terminée par une fente triangulaire (48) ménagée dans un sommet (42).

5. Dispositif (1) selon l'une des revendications 1 à 4, **caractérisé en ce que** le cadre (2) comprend au moins une encoche (27) adaptée pour être encliquetée avec une dent (37).

6. Dispositif (1) selon la revendication 5, **caractérisé en ce que** le capot (3) comprend au moins une dent (37) adaptée pour être encliquetée dans l'encoche (27) du cadre (2), pour fixer le capot (3) au cadre (2).

7. Dispositif (1) selon l'une des revendications 1 à 6, **caractérisé en ce que** le capot (3) comprend un élément préhensible (36).

8. Procédé de fabrication d'un dispositif (1) selon l'une des revendications 1 à 7, **caractérisé en ce qu'**il comprend au moins une étape de moulage bi-matière du dispositif (1).

9. Procédé selon la revendication 8, **caractérisé en ce qu'**il comprend au moins une étape de fourniture d'un moule configuré pour que le dispositif (1) soit moulé dans une position ouverte dans laquelle ladite au moins une dent (37) n'est pas encliquetée dans ladite au moins une encoche (27).

## Patentansprüche

1. Ausgusstüllenvorrichtung (1) für eine Verpackung (E), welche einen mit einer zentralen Öffnung (22) versehenen Rahmen (2) umfasst, der dazu vorgesehen ist, an der Verpackung (E) befestigt zu werden, und einen Deckel (3), der über zwei Wangen (4) und ein Scharnier (5) mit dem Rahmen verbunden ist, wobei der Rahmen (2) und der Deckel (3) in einem ersten Werkstoff geformt sind, **dadurch gekennzeichnet, dass** die Wangen (4) und das Scharnier (5) in einem zweiten Werkstoff geformt sind, wobei der zweite Werkstoff ein weiches Material umfasst, ausgewählt aus einer Gruppe bestehend aus Polyurethan und Elastomeren, und dadurch, dass die zwei Wangen (4) jede eine dreieckige Form aufweisen, die zur Innenseite des Rahmens (2) hin zusammenläuft, wobei die dreieckige Form drei Seiten (41) und drei Ecken (42) aufweist, und jede eine Faltlinie (43) besitzen, die im Wesentlichen einer Mittellinie zwischen einer der Ecken (42) und einer der Seiten (41) folgt, wobei die Faltlinie (43) von einem dreieckigen Spalt (44) abgeschlossen wird, der in einer Seite (41) ausgestaltet ist.

2. Vorrichtung nach Anspruch 1, **dadurch gekennzeichnet, dass** die Vorrichtung (1) zwei Dichthülsen (46) aufweist, die jede aus Formen mit einer Wange (4) hervorgegangen sind und jede eine Seitenkante (34) des Deckels (3) umhüllen.

3. Vorrichtung (1) nach Anspruch 1 oder 2, **dadurch gekennzeichnet, dass** der erste Werkstoff ein starres Material umfasst, ausgewählt aus einer Gruppe bestehend aus Polyethylen und Polypropylen.

4. Vorrichtung (1) nach einem der Ansprüche 1 bis 3, **dadurch gekennzeichnet, dass** die Faltlinie (43) von einem dreieckigen Spalt (48) abgeschlossen wird, der in einer Ecke (42) ausgestaltet ist.

5. Vorrichtung (1) nach einem der Ansprüche 1 bis 4, **dadurch gekennzeichnet, dass** der Rahmen (2) mindestens eine Einkerbung (27) umfasst, die dafür ausgebildet ist, mit einem Zahn (37) verrastet zu werden.

6. Vorrichtung (1) nach Anspruch 5, **dadurch gekennzeichnet, dass** der Deckel (3) mindestens einen Zahn (37) umfasst, der dafür ausgebildet ist, in der Einkerbung (27) des Rahmens (2) verrastet zu werden, um den Deckel (3) am Rahmen (2) zu befestigen.

7. Vorrichtung (1) nach einem der Ansprüche 1 bis 6, **dadurch gekennzeichnet, dass** der Deckel (3) ein greifbares Element (36) umfasst.

8. Verfahren zur Herstellung einer Vorrichtung (1) nach einem der Ansprüche 1 bis 7, **dadurch gekennzeichnet, dass** es mindestens einen Schritt des Formens von zwei Werkstoffen der Vorrichtung (1) umfasst.

9. Verfahren nach Anspruch 8, **dadurch gekennzeichnet, dass** es mindestens einen Schritt des Bereitstellens einer Form umfasst, die so eingerichtet ist, dass die Vorrichtung (1) in einer offenen Stellung geformt wird, in der der mindestens eine Zahn (37) nicht in der mindestens einen Einkerbung (27) verrastet ist.

## Claims

1. A spout device (1) for a packaging (E) which comprises a frame (2) provided with a central opening (22) intended to be fixed on the packaging (E), and a cover (3) connected to the frame by two cheeks (4) and a hinge (5), the frame (2) and the cover (3) being molded in a first material, **characterized in that** the cheeks (4) and the hinge (5) are molded in a second material, said second material comprising a flexible material selected from a group composed of polyurethane and elastomers, and **in that** the two cheeks (4) each have a triangular shape converging towards the inside of the frame (2), the triangular shape having three flanges (41) and three tops (42), and each have a fold line (43) substantially along a median line between one of the tops (42) and one of the flanges (41), the fold line (43) being terminated by a triangular slot (44) arranged in a flange (41).

2. The device according to claim 1, **characterized in that** the device (1) has two sealing sheaths (46) each integrally molded with a cheek (4) and each wrapping a lateral ridge (34) of the cover (3).

3. The device (1) according to claim 1 or 2, **characterized in that** the first material comprises a rigid material selected from a group consisting of polyethylene and polypropylene.

4. The device (1) according to any of claims 1 to 3, **characterized in that** the fold line (43) is terminated by a triangular slot (48) arranged in a top (42).

5. The device (1) according to any of claims 1 to 4, **characterized in that** the frame (2) comprises at least one notch (27) adapted to be snap-fitted with a tooth (37).

6. The device (1) according to claim 5, **characterized in that** the cover (3) comprises at least one tooth (37) adapted to be snap-fitted into the notch (27) of the frame (2), in order to fix the cover (3) to the frame (2).

7. The device (1) according to any of claims 1 to 6, **characterized in that** the cover (3) comprises a grippable element (36).

8. A method for manufacturing a device (1) according to any of claims 1 to 7, **characterized in that** it comprises at least one step of a two-shot molding of the device (1).

9. The method according to claim 8, **characterized in that** it comprises at least one step of providing a mold configured so that the device (1) is molded in an open position in which said at least one tooth (37) is not snap-fitted into said at least one notch (27).
